# EUROPÄISCHE PATENTSCHRIFT

(11) **EP 3 307 611 B1**
(45) Veröffentlichungstag und Bekanntmachung des Hinweises auf die Patenterteilung: **19.06.2019**
(21) Anmeldenummer: 17751771.1
(22) Anmeldetag: 14.08.2017
(51) Int. Cl.: B62J 1/18

(54) **FAHRRADSATTEL**
BICYCLE SADDLE
SELLE DE BICYCLETTE

(30) Priorität: 30.08.2016 DE 102016216309; 03.02.2017 DE 102017201775
(43) Veröffentlichungstag der Anmeldung: 18.04.2018
(60) Teilanmeldung: 18161149.2
(73) Patentinhaber: Ergon International GmbH, 56070 Koblenz (DE)
(72) Erfinder: ARNOLD, Franc, 56068 Koblenz (DE); KRAUSE, Andreas, 56068 Koblenz (DE)
(74) Vertreter: dompatent von Kreisler Selting Werner - Partnerschaft von Patent- und Rechtsanwälten mbB
(86) Internationale Anmeldenummer: PCT/EP2017/070628
(87) Internationale Veröffentlichungsnummer: WO 2018/041621

(56) Entgegenhaltungen:
- DE-A1-102011 057 020
- US-A- 5 108 076
- US-A- 5 203 607
- US-A- 5 348 369

## Beschreibung

Die Erfindung betrifft einen Fahrradsattel.

Fahrradsättel weisen eine Sattelschale auf, deren Unterseite üblicherweise mit einem Sattelgestell verbunden ist. Auf der Oberseite der Sattelschale ist ein Sattelpolster angeordnet. Üblicherweise sind Sattelpolster aus aufgeschäumtem Material wie PU-Schaum hergestellt. Die Sattelpolster sind auf die Oberseite der Sattelschale aufgeklebt. Derartige, insbesondere geschäumte Sattelpolster weisen gute Dämpfungseigenschaften auf. Allerdings kann insbesondere bei längeren Fahrten ein derartiges Zusammendrücken des Polsters erfolgen, dass insbesondere die Sitzknochen des Benutzers auf die Oberseite der Sattelschale drücken, so dass Druckstellen entstehen. Dies liegt darin begründet, dass der sogenannte Rebound derartiger Sattelpolster gering ist. Es ist daher bekannt, im Sitzbereich, d.h. im hinteren Bereich des Fahrradsattels, in dem die Sitzknochen des Benutzers angeordnet sind, Gelpolster vorzulegen. Derartige mit einem gelatine- oder gelartigen Material gefüllte Einlegeelemente werden in Ausnehmungen des Sattelpolsters eingelegt. Anschließend werden das Sattelpolster sowie die eingelegten Gelelemente mit einem Textilelement oder dergleichen überzogen. Derartige Gelelemente führen nur bedingt zu einer Verbesserung des Sitzkomforts, da durch die Gelelemente die auftretenden Kräfte nur besser verteilt werden.

Dokument DE 10 2011 057 020 A1 offenbart die Präambel des Anspruchs 1.

Aufgabe der Erfindung ist es, einen Fahrradsattel mit verbessertem Sitzkomfort zu schaffen.

Die Lösung der Aufgabe erfolgt durch einen Fahrradsattel gemäß Anspruch 1.

Ein Fahrradsattel weist eine üblicherweise aus hartem Kunststoff hergestellte Sattelschale auf. An der Unterseite der Sattelschale ist ein Sattelgestell angeordnet. Das Sattelgestell dient zur Verbindung mit dem Sattelstützrohr, wobei das Sattelgestell auch einstückig mit dem Stützrohr ausgebildet sein kann. Bei üblichen Sätteln handelt es sich bei dem Sattelgestell um ein aus Metallstreben hergestelltes Element, das sowohl mit einer in Fahrtrichtung nach vorne weisenden Sattelspitze als auch mit der Rückseite des Sattels verbunden ist. Auch andere Verbindungen zwischen der Sattelschale und dem Sattelgestell bzw. einem dem Sattelgestell entsprechenden Verbindungselement zum Sattelstützrohr sind bekannt. An der Oberseite der Sattelschale ist ein Sattelpolster angeordnet. Dies kann auf die Oberseite der Sattelschale aufgeklebt sein oder durch entsprechende Herstellungsverfahren direkt bereits während der Herstellung mit der Oberseite der Sattelschale verbunden werden.

Bei den erfindungsgemäßen Fahrradsätteln weist das Sattelpolster mindestens zwei Polsterelemente auf. Die Polsterelemente dienen insbesondere zum Dämpfen der beim Fahrradfahren auftretenden Bewegungen sowie zur möglichst komfortablen Unterstützung des Benutzers. Die Polsterelemente können hierbei auch aus unterschiedlichem Material hergestellt sein, wobei die entsprechenden Elemente insbesondere zur Dämpfung und Unterstützung dienen.

Bei einem ersten nicht erfindungsgemäßen Fahrradsattel weist das Sattelpolster zumindest ein inneres Polsterelement und zumindest ein äußeres Polsterelement auf. Es ist nicht beansprucht, dass das innere Polsterelement von dem äußeren Polsterelement zumindest teilweise umgeben. Es ist nicht beansprucht, dass das innere Polsterelement von dem äußeren Polsterelement durch Umspritzen oder Umschäumen umgeben ist. Hierdurch ist es insbesondere möglich, während der Herstellung des äußeren Polsterelements eine Verbindung zwischen dem äußeren und dem inneren Polsterelement herzustellen, da bei dem Umspritzungs- bzw. Umschäumungsprozess eine entsprechende Materialverbindung realisiert werden kann.

Es ist nicht beansprucht, dass das innere Polsterelement derart angeordnet ist, dass es an der Oberseite der Sattelschale angeordnet ist. Das innere Polsterelement liegt somit vorzugsweise an der Oberseite der Sattelschale an oder berührt diese. Insbesondere ist das innere Polsterelement mit der Sattelschale verbunden, wobei eine Verbindung durch ein Verkleben, Verrasten oder anderweitiges Fixieren erfolgen kann. Es ist nicht beansprucht, dass oberhalb des inneren Polsterelements zumindest teilweise ein äußeres Polsterelement angeordnet ist bzw. das äußere Polsterelement das innere Polsterelement auf der Oberseite insbesondere großteils umgibt. Es ist somit möglich, zwei unterschiedliche Materialien zu kombinieren. Dies erfolgt insbesondere im Sitzbereich. So kann das Material des äußeren Polsterelements derart gewählt werden, dass es eine gute Dämpfung aufweist, d.h. möglichst weich und für den Benutzer angenehm ausgestaltet ist. Das innere Polsterelement kann sodann etwas fester ausgebildet sein und vorzugsweise gute Rebound-Eigenschaften, d.h. gute Unterstützungseigenschaften aufweisen.

Es ist nicht beansprucht, dass eine Unterseite des inneren Polsterelements die Oberseite der Sattelschale flächig berührt. Insbesondere ist das innere Polsterelement mit der Oberseite der Sattelschale flächig verbunden, insbesondere verklebt oder auf andere Weise fixiert.

Bei einer weiteren nicht beanspruchten Ausführungsform kann das innere Polsterelement Ansätze aufweisen, die die Oberseite der Sattelschale berühren. Es handelt sich hierbei insbesondere um als Füße oder Stege ausgebildete Ansätze, so dass kein flächiges Berühren des inneren Polsterelements an der Oberseite der Sattelschale erfolgt, sondern nur die Ansätze die Sattelschale berühren. Dies hat den Vorteil, dass in den Bereichen zwischen dem inneren Polsterelement und der Oberseite der Sattelschale ein weiteres Polsterelement insbesondere aus einem anderen Material eingebracht werden kann. Insbesondere handelt es sich hierbei um dasselbe Material, aus dem das äußere Polsterelement hergestellt ist, wobei es insbesondere bevorzugt ist, dass es sich hierbei um aufgeschäumtes bzw. aufschäumbares Material handelt.

Bei einer besonders bevorzugten, jedoch nicht beanspruchten, Ausführungsform weist das innere Polsterelement mindestens einen Halteansatz auf. Der Halteansatz ragt bei befestigtem inneren Polsterelement in zumindest eine Ausnehmung der Halteschale. Bei der Ausnehmung kann es sich insbesondere um zumindest eine Vertiefung in der Oberseite der Halteschale handeln. Der mindestens eine Halteansatz, der in die Vertiefung oder Ausnehmung ragt, dient zur Lagedefinition und ggf. auch zur Fixierung des inneren Polsterelements an der Sattelschale. Besonders bevorzugt ist es hierbei, dass die Ausnehmung als durchgehende Öffnung der Sattelschale ausgebildet ist. Hierdurch ist bereits die Herstellung der Sattelschale bzw. der Ausnehmung vereinfacht. Der mindestens eine Halteansatz ist bei dieser Ausführungsform vorzugsweise derart ausgebildet, dass er durch die Öffnung hindurch ragt. Dies hat den Vorteil, dass das Vorsehen eines inneren Polsterelements von außen bei Betrachten des Sattels von unten sichtbar ist. Des Weiteren ist eine derartige Ausgestaltung der Ausnehmung als durchgehende Öffnung vorteilhaft, da hierdurch der Halteansatz auf einfache Weise zum Fixieren des inneren Polsterelements genutzt werden kann.

Der Halteansatz ist insbesondere in seiner Formgestaltung und Abmessung derart ausgebildet, dass ein Eindrücken in die Öffnung mit einem gewissen Widerstand möglich ist, so dass beispielsweise aufgrund einer Verformung des Halteansatzes und/oder der Reibung zwischen Halteansatz und Öffnungsrand ein Fixieren des inneren Polsterelements mit Hilfe des Halteansatzes in der Öffnung möglich ist. Vorzugsweise weist der Halteansatz mindestens einen Fortsatz, der beispielsweise wulstartig ausgebildet sein kann, auf. Der mindestens eine Fortsatz dient zur Fixierung des inneren Polsterelements an der Sattelschale bzw. in der Öffnung in der Sattelschale. Insbesondere ist der mindestens eine Fortsatz derart ausgebildet, dass in eingedrücktem bzw. montiertem Zustand der Fortsatz eine Unterseite der Sattelschale hintergreift. Der Fortsatz ist somit etwas größer als die Öffnung in diesem Bereich. Insbesondere kann der Fortsatz auch ringförmig ausgebildet sein, so dass eine sehr gute Fixierung des inneren Polsterelements an der Sattelschale durch ein Drücken des Halteansatzes in die Öffnung möglich ist.

In bevorzugter Ausgestaltung des Fahrradsattels ist das mindestens eine Polsterelement im Sitzbereich, d.h. im hinteren Bereich des Fahrradsattels angeordnet. Hierbei handelt es sich um den Bereich, in dem der Benutzer auf dem Sattel sitzt und in dem insbesondere die Sitzknochen angeordnet sind. Ebenso kann das innere Polsterelement oder ein weiteres inneres Polsterelement im Mittelbereich bzw. im Dammbereich des Fahrradsattels angeordnet sein. Dieses innere Polsterelement kann insbesondere dünner ausgestaltet sein, da die Druckbelastung in diesem Bereich insbesondere nur in nach vorne gebeugten Sitzpositionen vergrößert ist. Bevorzugt ist es, dass ein inneres Polsterelement derart ausgebildet ist, dass es sowohl im Sattelbereich als auch im Mittelbereich angeordnet ist. Insbesondere ist ein derartiges Polsterelement einstückig ausgebildet. Bevorzugt ist es hierbei wiederum, dass ein derartiges inneres Polsterelement im Mittelbereich dünner ausgebildet ist als im Sitzbereich. Hierdurch ist eine sehr gute Verbesserung des Komforts erzielt.

Das innere Polsterelement ist in besonders bevorzugter Ausführungsform vollständig von dem äußeren, insbesondere durch Aufschäumen hergestellten Polsterelement umgeben. Hierbei ist es bevorzugt, dass eine Unterseite des inneren Polsterelements nicht oder nur teilweise vom äußeren Polsterelement umgeben ist, da diese Seite des inneren Polsterelements in bevorzugter Ausführungsform an der Oberseite der Sattelschale anliegt.

Vorzugsweise ist ein rückseitiger Bereich des inneren Polsterelements nicht von einem äußeren Polsterelement umgeben. Bei dem rückseitigen Bereich handelt es sich um einen Bereich des inneren Polsterelements, der in Fahrtrichtung nach hinten weist. Vorzugsweise ist das innere Polsterelement derart angeordnet bzw. ausgebildet, dass der rückseitige Bereich des inneren Polsterelements an einer Rückseite der Sattelschale, insbesondere im Bereich der rückwärtigen Kante der Sattelschale angeordnet ist. Diesen Bereich eines inneren Polsterelements nicht mit einem äußeren Polsterelement zu umgeben, hat insbesondere den Vorteil, dass das innere Polsterelement sichtbar ist und insofern für den Benutzer unmittelbar erkennbar ist, dass es sich um einen Fahrradsattel mit mehreren, insbesondere aus unterschiedlichem Material hergestellten Polsterelementen handelt.

Bei einem erfindungsgemäßen Fahrradsattel ist wiederum eine Sattelschale vorgesehen, an deren Unterseite ein Sattelgestell und an deren Oberseite ein Sattelpolster angeordnet ist. Das Polsterelement weist wiederum mindestens zwei Polsterelemente auf. Bei dieser Erfindung, die eine selbständige Erfindung darstellt, weist das Sattelpolster ein Hauptpolsterelement und ein Zusatzpolsterelement auf. Das Hauptpolsterelement ist mit einer Oberseite der Sattelschale verbunden. Die Verbindung kann beispielsweise durch Verkleben, aber auch unmittelbar durch das Herstellungsverfahren erfolgen. Das Hauptpolsterelement weist eine Ausnehmung oder Vertiefung auf, in der das Zusatzpolsterelement angeordnet ist. Das in die Ausnehmung eingelegte oder eingefügte Zusatzpolsterelement ist beispielsweise eingeklebt. Das Hauptpolsterelement kann mehrere Ausnehmungen aufweisen, in denen jeweils eine Zusatzpolsterelement angeordnet ist.

In einer nicht beanspruchten Ausführungsform dieses Fahrradsattels ist das Hauptpolsterelement nicht von einem textilen Material überzogen oder überspannt. Bevorzugt ist es allerdings, dass das Zusatzpolsterelement insbesondere zur Verringerung von Reibung mit einem Textilmaterial zumindest an der Ober- bzw. Außenseite versehen ist.

Das mindestens eine Zusatzpolsterelement kann in einem Sitzbereich oder in einem Mittelbereich angeordnet sein. Besonders bevorzugt ist die Anordnung derartiger Zusatzpolsterelemente in Außenbereichen des Mittelbereichs. Es handelt sich hierbei um Bereiche, an denen beim Treten die Innenseiten der Oberschenkel anliegen bzw. an denen die Innenseiten der Oberschenkel reiben.

Das Zusatzpolsterelement ist entsprechend dem vorstehen beschriebenen inneren Polsterelement vorzugsweise derart ausgebildet, dass ein am Sitzbereich angeordnetes Zusatzpolsterelement dicker ist als an einem Mittelbereich des Sattels angeordnetes Zusatzpolsterelement. Insbesondere sind entweder zwei gesonderte Zusatzpolsterelemente oder ein entsprechend einstückig ausgebildetes, beide Bereiche überdeckendes Zusatzpolsterelement vorgesehen. Sofern insbesondere in den beiden, d.h. sowohl im linken als auch im rechten Außenbereich des Mittelbereichs, entsprechende Zusatzpolsterelemente vorgesehen sind, können diese auch mit einem im Mittelbereich angeordneten Zusatzpolsterelement verbunden oder einstückig ausgebildet sein.

Ein erfindungsgemäßes Polsterelement kann insbesondere auch derart ausgebildet sein, dass es sowohl im Sitzbereich als auch im Mittelbereich angeordnet ist, wobei es sich wiederum um zwei miteinander verbundene oder ein einstückig ausgebildetes Zusatzpolsterelement handeln kann. Im Mittelbereich ist das Zusatzpolsterelement vorzugweise dünner ausgebildet als im Sitzbereich.

Bevorzugt ist es, dass insbesondere zur Verringerung der Reibung und zur Vergrößerung des Komforts das mindestens eine Zusatzpolsterelement zumindest an seiner Außenseite mit einem insbesondere textilen Material überspannt ist. Hierbei wird insbesondere Material eingesetzt, das zum Überspannen von Sitzpolstern bei Fahrradsätteln geeignet und üblich ist.

Das Zusatzpolsterelement ist in bevorzugter Ausführungsform in die entsprechende Ausnehmung oder Vertiefung des Hauptpolsterelements eingeklebt.

In besonders bevorzugter Ausführungsform ist das innere Polsterelement bzw. das Hauptpolsterelement als Elastomerkörper ausgebildet. Insbesondere weist der Elastomerkörper thermoplastische Elastomere (EPE) auf. Bevorzugt ist die Verwendung von Schäumen, wie PU-Schäume. Insbesondere sind geschlossenporige Schäume bevorzugt. Besonders bevorzugt weist das innere Polsterelement bzw. das Hauptpolsterelement TPU (thermoplastisches Polyurethan) auf und ist besonders bevorzugt aus diesem Material hergestellt. Besonders geeignet ist hierfür das von der Firma BASF unter dem Produktnamen "Infinergy" hergestellte Material. Verfahren zur Herstellung von TPU sind beispielsweise in EP 692510, WO 00/44821, EP 1174459 und EP 1174458 beschrieben. Ferner ist es bevorzugt, das innere Polsterelement bzw. das Hauptpolsterelement aus EVA (Ethylenvinylacetat) herzustellen, oder das Hauptpolsterelement aus Material herzustellen, das EVA aufweist. Ferner sind als Materialien EPP (expandiertes Polypropylen), TPE (thermoplastisches Elastomer) und EPE (expandiertes Polyethylen) verwendbar. Auch eine Kombination dieser Materialien miteinander oder eine Kombination der Materialien mit anderen Materialien ist möglich, zum Beispiel in einem Mehrschichtaufbau. Insbesondere können auch Mischungen mit Co- oder Terpolymeren eingesetzt werden. Hierdurch können unterschiedliche Dämpfungs- und Bewegungseigenschaften des Elastomer-körpers erzielt werden. Auch ist es möglich, die entsprechenden Materialien in unterschiedlichen Bereichen stärker zu verdichten, so dass hierdurch die Dämpfungs- und Bewegungseigenschaften beeinflusst werden können.

Des Weiteren ist als Material für den Elastomerkörper ein thermoplastischer elastomerer Kugelschaum geeignet. Ein derartiger Schaum wird von der Firma Sekisui unter dem Produktnamen "ELASTIL" angeboten. Dabei handelt es sich insbesondere um einen geschlossenzelligen Schaum. In bevorzugter Ausführungsform weist der Elastomerkörper erfindungsgemäß einen thermoplastischen elastomeren Kugelschaum wie insbesondere Elastil auf oder ist aus diesem hergestellt. Möglich ist auch eine Kombination mit den anderen beschriebenen, für die Ausbildung des Elastomerkörpers geeigneten Materialien.

Ein weiteres gut geeignetes Material zur Ausbildung des Elastomerkörpers ist ein Polyester-basiertes PU-Material. Besonders geeignet ist hierbei das von der Firma BASF unter dem Markennamen "Elastopan" angebotene Material. Vorzugsweise weist der Elastomerkörper ein derartiges Material auf oder ist aus diesem hergestellt, wobei es wiederum möglich ist, dieses Material mit anderen beschriebenen Materialien zu kombinieren.

Erfindungsgemäss weist der Elastomerkörper einen oder mehrere Partikelschäume auf und ist insbesondere aus einem oder mehreren Partikelschäumen hergestellt. Als Grundmaterial sind hierbei E-PTU, EPP, EPS, EPE oder ähnliche Schäume besonders bevorzugt. Partikelschäume bestehen hierbei in der Regel aus kleinen Kügelchen des expandierten Grundmaterials. Diese als Kügelchen oder andere Körper geformten Partikel werden in einem Werkzeug wie einer Form oder dergleichen unter Temperatur, ggf. auch unter Wasserdampf in ihre Endform gebracht. Partikelschäume haben insbesondere den Vorteil, dass sie eine geringe Dichte, eine gute Wärme-/Kälteisolation und gute Dämpfungseigenschaften aufweisen.

Der Elastomerkörper, d. h. das innere Polsterelement bzw. das Hauptpolsterelement weist in besonders bevorzugter Ausführungsform ein Elastizitätsmodul von 0,1 bis 10 MPA, insbesondere 0,1 bis 5 MPA und besonders bevorzugt 0,1 bis 1,0 MPA auf. Das besonders bevorzugte Material "Infinergy E-TPU" weist ein Elastizitätsmodul von 0,1 bis 0,5 MPA auf.

Des Weiteren ist es besonders bevorzugt, dass der Elastomerkörper aufgrund seiner geringen Dichte ein geringes Gewicht aufweist. Insbesondere weist der Elastomerkörper eine Dichte von weniger als 1 g/cm³, besonders bevorzugt weniger als 0,5 g/cm³, und insbesondere weniger als 0,2 g/cm³ auf. Eines der besonders bevorzugten Materialien, das Material Elastil, weist eine Dichte im Bereich von 0,05 bis 0,2 g/cm³ auf.

Das Rebound-Verhalten des inneren Polsterelements bzw. des Hauptpolsterelements liegt vorzugsweise im Bereich von mehr als 30%, insbesondere mehr als 40% und besonders bevorzugt mehr als 50%.

Das äußere Polsterelement bzw. das Zusatzpolsterelement ist vorzugsweise aus einem schäumbaren Material, insbesondere geschäumtem Kunststoff hergestellt. Besonders geeignet ist PU-Schaum.

Die Sattelschale weist als Material vorzugsweise PP, PA6 oder PA12 auf oder ist aus diesem Material hergestellt. Das Elastizitätsmodul der Sattelschale liegt erfindungsgemäß im Bereich von 1000 bis 10000 MPA, vorzugsweise im Bereich von 2500 bis 6000 MPA und besonders bevorzugt im Bereich von 3000 bis 5000 MPA. Bevorzugt ist die Verwendung von PP (E-Modul: 1100 bis 1450 MPA), PP GF20 (E-Modul ca. 2900 MPA) und/oder PA 6 GF15 (E-Modul 4500 bis 6500 MPA).

Eine weitere unabhängige Erfindung, welche nicht beansprucht ist, stellt ein Sattelpolster für einen Fahrradsattel dar, wobei das erfindungsgemäße Sattelpolster insbesondere für die vorstehend beschriebenen Fahrradsättel geeignet ist.

Das Sattelpolster weist zwei Polsterelemente auf. Ein erstes Polsterelement ist in bevorzugter Ausführungsform aus TPU und/oder EVA und/oder EPP und/oder TPE und/oder EPE hergestellt bzw. weist dieses Material auf. Hierbei kann das erste Polsterelement auch aus Kombinationen dieser Materialien oder aus einer Kombination mit anderen Materialien hergestellt sein. Das erste Polsterelement ist somit aus einem Material hergestellt, das in bevorzugter Ausführungsform dem Material entspricht, aus dem das innere Polsterelement bzw. das Hauptpolsterelement hergestellt ist. Bei dem zweiten Polsterelement handelt es sich um ein Polsterelement aus aufschäumbarem Material. Besonders bevorzugt ist es, dass es sich hierbei um PU-Schaum handelt. Das zweite Polsterelement ist somit entsprechend der bevorzugten Ausführungsform des äußeren Polsterelements bzw. des Zusatzpolsterelements hergestellt bzw. weist das entsprechende Material auf. In besonders bevorzugter Ausführungsform ist das erste Polsterelement von dem zweiten Polsterelement zumindest teilweise umgeben, insbesondere umspritzt bzw. umschäumt.

Ferner betrifft die Erfindung einen Fahrradsattel mit einem derartigen Sattelpolster.

Zur Herstellung des Sattelpolsters ist es bevorzugt, zunächst ein erstes Polsterelement aus TPU oder einem anderen der vorstehend definierten Materialien in einer Gussform zu befestigen. Im nächsten Verfahrensschritt erfolgt ein Einbringen von Material in die Gussform zur Ausbildung des zweiten Polsterelements, wobei es sich bei dem Material des zweiten Polsterelements insbesondere um PU-Schaum oder eins der anderen vorstehend definierten Materialien handelt. Das erste Polsterelement ist in bevorzugter Ausführungsform in der Gussform eingespannt. Das erste Polsterelement berührt somit beispielsweise einen Deckel und ein gegenüberliegenden Bodenelement der Gussform. Beim anschließenden Einbringen des Materials für das zweite Polsterelement und das anschließende Aufschäumen dieses Materials ist somit ein Sattelpolster geschaffen, bei dem das erste Polsterelement in den beiden Bereichen, in denen es die Gussform berührt, nicht von dem zweiten Polsterelement umgeben bzw. umschäumt ist. Hierdurch können insbesondere Sattelpolster hergestellt werden, wie vorstehend anhand der erfindungsgemäßen Fahrradsättel beschrieben.

Das erste Polsterelement ist in bevorzugter Ausführungsform vorgefertigt. Hierzu wird das erste Polsterelement vorzugsweise in einer gesonderten Form vorgefertigt. Das vorgefertigte erste Polsterelement wird sodann in die Gussform eingelegt.

In einer bevorzugten Weiterbildung des Verfahrens zur Herstellung des Sattelpolsters kann in die Gussform vor dem Einlegen des ersten Polsterelements ein Sattelüberzug bzw. ein Sattelpolsterüberzug eingelegt werden. Dieser ist insbesondere aus textilem Material hergestellt und wird in besonders bevorzugter Ausführungsform durch Unterdruck in der Gussform gehalten. Hierdurch kann eine äußerst glatte Oberfläche realisiert werden. Bei einem weiteren Verfahren zur Herstellung eines Fahrradsattels, das eine unabhängige Erfindung darstellt, welche nicht beansprucht wird, erfolgt in einem ersten Schritt ein Befestigen eines inneren Polsterelements an einer Oberseite der Sattelschale. Anschließend wird die Sattelschale zusammen mit dem daran befestigten inneren Polsterelement in eine Gussform eingelegt. Im darauffolgenden Schritt wird ein Material in die Gussform eingebracht zur Ausbildung eines äußeren Polsterelements. Polsterelemente sind hierbei vorzugsweise durch Aufschäumen dieses Materials in der Gussform hergestellt. Durch das Befestigen des inneren Polsterelements an der Sattelschale ist es insbesondere möglich, dass zwischen einer Oberseite des inneren Polsterelements, d.h. der von der Oberseite der Sattelschale abgewandten Oberseite des Polsterelements und einer Innenseite der Gussform ein Abstand vorgesehen ist. In diesen dringt das Material des äußeren Polsterelements ein, so dass das innere Polsterelement zumindest teilweise von dem äußeren Polsterelement umgeben, insbesondere umschäumt bzw. umspritzt ist.

Das innere Polsterelement kann auch derart ausgebildet bzw. angeordnet werden, dass dieses in einzelnen Bereichen, wie beispielsweise im Bereich einer Rückseite des Polsterelements, an der Innenseite der Gussform anliegt. Dies führt dazu, dass das innere Polsterelement in diesem Bereich nicht von dem äußeren Polsterelement umgeben ist.

Das innere Polsterelement, das vorzugsweise aus TPU hergestellt ist, ist vorzugsweise vorgefertigt. Besonders bevorzugt ist es, dass das innere Polsterelement einen Halteansatz aufweist, wie vorstehend beschrieben. Dieser kann in eine Ausnehmung der Sattelschale, die insbesondere als durchgehende Öffnung ausgebildet ist, eingedrückt werden. Hierdurch ist, wie vorstehend anhand des Fahrradsattels beschrieben, auf einfache Weise ein Anordnen bzw. Fixieren des mindestens einen inneren Polsterelements an der Sattelschale auf einfache Weise möglich.

Die Sattelschale wird in bevorzugter Ausführungsform zusammen mit dem daran befestigten mindestens einen inneren Polsterelement mit nach unten weisender Oberseite in die Gussform eingelegt. Dies ist zum Einbringen des Materials für das äußere Polsterelement, das insbesondere eingeschüttet oder eingeführt werden kann, vorteilhaft. Insofern ist es besonders bevorzugt, dass das innere Polsterelement an der Oberseite der Sattelschale fixiert ist, um ein Herunterfallen bzw. Absinken des inneren Polsterelements in der Gussform während des Herstellungsprozesses zu vermeiden.

In einer weiteren bevorzugten Ausführungsform erfolgt vor dem Einlegen der Sattelschale in die Gussform ein Einlegen des Sattelüberzugs in die Gussform. Hierbei handelt es sich insbesondere um einen Sattelüberzug aus textilem Material oder einem anderen zum Überziehen von Sätteln üblichen Material. Um eine glatte Oberfläche zu realisieren, ist es bevorzugt, dass der Sattelüberzug durch Unterdruck in der Gussform gehalten wird.

Üblicherweise ist vor der Herstellung des Fahrradsattels die Sattelschale auch bereits mit dem Sattelgestell verbunden, wobei dies nicht unbedingt der Fall sein muss.

Das nicht beanspruchte Verfahren ist, insbesondere wie vorstehend anhand des Fahrradsattels mit einem inneren und einem äußeren Polsterelement beschrieben, vorteilhaft weitergebildet.

Die Herstellung des Fahrradsattels mit einem Haupt- und einem Zusatzpolsterelement erfolgt in bevorzugter Ausführungsform derart, dass die Sattelschale in eine Gussform eingelegt wird. Die innere Oberfläche der Gussform ist hierbei derart ausgebildet, dass hierdurch die Ausnehmung in dem Hauptpolsterelement ausgebildet wird. Im nächsten Schritt erfolgt dann ein Einbringen des Materials für das Hauptpolsterelement, wobei es sich hierbei vorzugsweise um TPU handelt. Nach erfolgter Herstellung des Hauptpolsterelements, das durch das Herstellungsverfahren unmittelbar mit der Oberseite der Sattelschale fest verbunden ist, kann das Zusatzpolsterelement in der Ausnehmung angeordnet werden. Das Zusatzpolsterelement, das vorzugsweise aus aufgeschäumtem Material herstellt ist und ggf. mit einem Sattel- bzw. Polsterüberzug überzogen ist, wird vorzugsweise in einem gesonderten Verfahren hergestellt. Das erfindungsgemäße Verfahren zur Herstellung des Fahrradsattels mit Haupt- und Zusatzpolsterelement ist vorzugweise wie vorstehend anhand des entsprechenden Sattels beschrieben, weitergebildet.

Die Verwendung von TPU als Polstermaterial hat grundsätzlich den Nachteil, dass das Material aus einer Vielzahl von kugelähnlichen bzw. sphärischen Gebilden hergestellt ist. Insofern ist die Oberfläche des Materials relativ rau bzw. uneben. Durch Umgeben, insbesondere Umschäumen des TPU mit einem aufschäumbaren Material, können diese Unebenheiten ausgeglichen werden. Auch kann durch Vorsehen eines entsprechenden äußeren Materials und/oder eines Sattelüberzugs eine Oberfläche mit geringerer Reibung hergestellt werden.

Beim Verwenden von TPU für das Hauptpolsterelement ist dieses in großen Bereichen des Sattels sichtbar, wobei insbesondere im Sitzbereich sodann ein aus aufgeschäumtem Material oder dergleichen hergestelltes Zusatzpolsterelement vorgesehen ist, so dass der Komfort verbessert ist.

Nachfolgend werden die Erfindungen anhand bevorzugter Ausführungsformen unter Bezugnahme auf die anliegenden Zeichnungen näher erläutert.

Es zeigen:
Fig. 1 eine schematische Draufsicht einer ersten nicht beanspruchten Ausführungsform eines Fahrradsattels,
Fig. 2 eine schematische Schnittansicht entlang der Linie II-II in Fig. 1,
Fig. 2a eine schematische Schnittansicht einer alternativen, jedoch nicht beanspruchten Ausführungsform zu Figur 2,
Fig. 3 eine schematische Schnittansicht entlang der Linie II-II einer alternativen Ausführungsform,
Fig. 4 eine schematische Draufsicht einer weiteren nicht beanspruchten Ausführungsform eines Fahrradsattels,
Fig. 5 eine schematische Schnittansicht entlang der Linie V-V in Fig. 4,
Fig. 6 eine schematische Draufsicht einer erfindungsgemässen Ausführungsform eines Fahrradsattels, und
Fig. 7 eine schematische Schnittansicht entlang der Linie VII-VII in Fig. 6.

In den nachstehend beschriebenen, unterschiedlichen bevorzugten Ausführungsformen der Erfindungen sind ähnliche und identische Bauteile jeweils mit denselben Bezugszeichen gekennzeichnet.

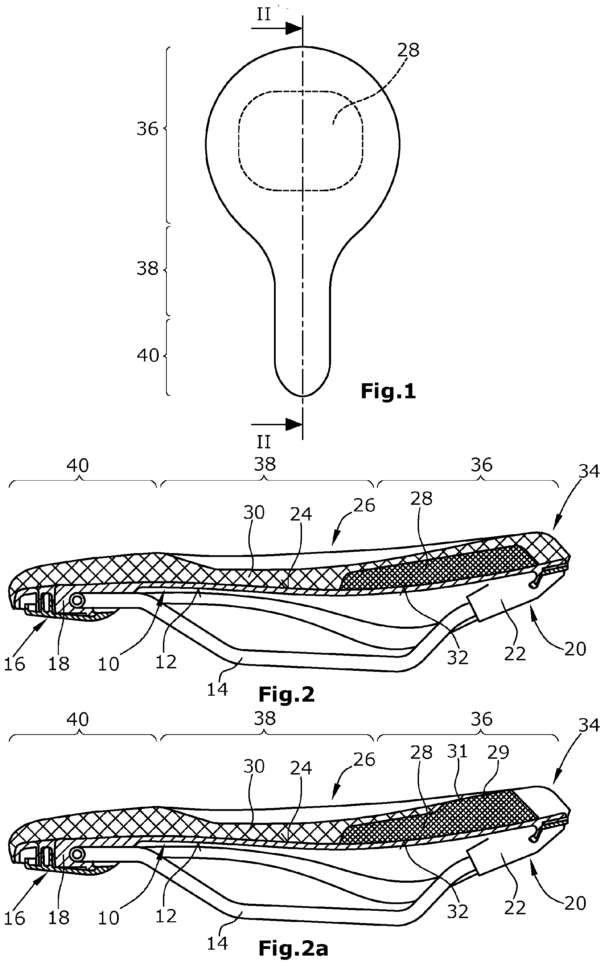

Die dargestellten Fahrradsättel weisen jeweils eine Sattelschale 10 auf. Mit einer Unterseite 12 der Sattelschale 10 ist ein Sattelgestell 14 verbunden. Hierbei ist das Sattelgestell 14 insbesondere durch zwei Metallstreben ausgebildet, von denen in Schnittansichten (Figuren 2, 3, 5 und 7) jeweils die hintere Strebe sichtbar ist. Im Bereich einer Sattelspitze 16 sind die beiden Streben in einem Ansatz 18 der Sattelschale 10 fixiert. Im Bereich einer Rückseite 20 des Sattels sind die beiden Streben des Gestells 14 jeweils getrennt voneinander in einem Ansatz 22 der Sattelschale 10 fixiert.

Auf einer Oberseite 24 der Sattelschale 10 ist ein Sattelpolster 26 angeordnet, das in den unterschiedlichen Ausführungsbeispielen unterschiedlich aufgebaut ist.

In der ersten bevorzugten Ausführungsform (Figuren 1 und 2) weist das Sattelpolster 26 ein inneres Polsterelement 28 sowie ein das innere Polsterelement 28 im Wesentlichen vollständig umgebendes äußeres Polsterelement 30 auf. Das innere Polsterelement 28 ist vorzugsweise aus TPU und das äußere Polsterelement 30 aus einem PU-Schaum hergestellt. Das innere Polsterelement 28 liegt mit einer ebenen Unterseite 32 an der Oberseite 24 der Sattelschale 10 an. Gegebenenfalls ist das innere Polsterelement 28 durch Verkleben mit der Oberseite 24 der Sattelschale 10 verbunden. Der PU-Schaum dient zur Erzeugung des äußeren Polsterelements 30, das mit Ausnahme der Unterseite 32 die übrigen Seiten des inneren Polsterelements 28 umgibt. Gegebenenfalls kann das innere Polsterelement 28 auch derart angeordnet sein, dass das äußere Polsterelement 30 dieses beispielsweise im Bereich einer Rückseite 34 nicht umgibt, so dass das innere Polsterelement in diesem Bereich sichtbar ist.

In dem in den Figuren 1 und 2 dargestellten Ausführungsbeispiel ist das innere Polsterelement 28 in einem Sitzbereich 36 des Sattels angeordnet. An den Sitzbereich 36 schließen ein Mittelbereich 38 sowie eine Sattelspitze 40 an. Sowohl im Mittelbereich 38 als auch im Bereich der Sattelspitze 40 ist in diesem Ausführungsbeispiel ausschließlich ein Sattelpolster aus PU-Schaum angeordnet, so dass in diesem Bereich ausschließlich das äußere Polster 30 vorgesehen ist.

Bei einer alternativen Ausführungsform gemäß Figur 2a sind ähnliche und identische Bauteile mit denselben Bezugszeichen gekennzeichnet. Der einzige Unterschied zwischen der in Figur 2 und in Figur 2a gezeigten Ausführungsform ist die Ausgestaltung des inneren Polterelements 28. Bei der Ausgestaltung gemäß Figur 2a weist das innere Polsterelement 28 einen sich nach oben erstreckenden Ansatz 29 auf. Der Ansatz 29 ist vorzugsweise einstückig mit dem inneren Polsterelement 28 ausgebildet. Eine Oberseite 31 des Ansatzes 29 ist in dieser Ausführungsform nicht von dem äußeren Polsterelement 30 bedeckt, so dass die Oberseite 31 des Ansatzes 29 für den Benutzer gut sichtbar ist.

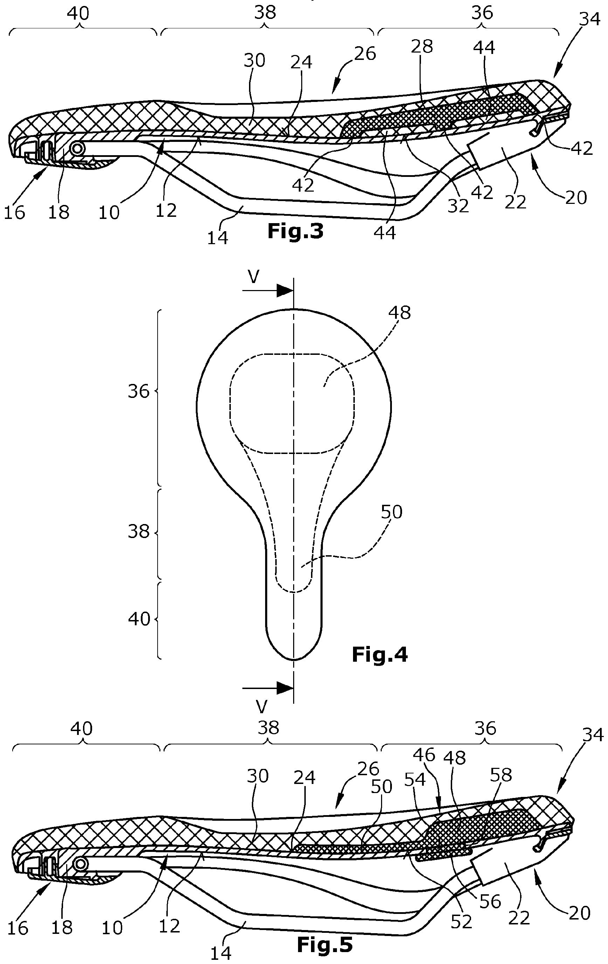

Bei einer alternativen Ausführungsform (Figur 3) ist das innere Polsterelement 28 derart ausgebildet, dass es in Richtung der Oberseite 24 der Sattelschale 10 weisende Ansätze bzw. Füße 42 aufweist. Ein derart ausgebildetes inneres Polsterelement 28 ist insbesondere über die Füße 42 mit der Oberseite 24 der Sattelschale 10 verbunden, beispielsweise verklebt. Durch das Vorsehen der Füße ist es möglich, unterhalb des inneren Polsterelements 28 Bereiche 44 auszugestalten. Diese können als Hohlräume ausgestaltet sein oder ebenfalls mit dem Schaum im Material des äußeren Sattelelements 30 gefüllt sein.

Durch die in Figur 3 dargestellte Ausführungsform können die Dämpfungs- und Rebound-Eigenschaften des Sattels im Sitzbereich 36 variiert werden.

Das in Figur 3 dargestellte innere Polsterelement 28 kann in einer alternativen Ausführungsform ebenfalls einen Ansatz 29 entsprechend der in Figur 2a dargestellten Ausführungsform aufweisen.

Das innere Polsterelement kann auch, wie in Figur 5 dargestellt, als inneres Polsterelement 46 ausgebildet sein oder eine andere Form aufweisen. Das innere Polsterelement 46 ist im Sitzbereich 36 ähnlich ausgestaltet wie das in Figur 2 dargestellte innere Polsterelement 28. Zusätzlich ist bei dem inneren Polsterelement 46 mit dem im Sitzbereich angeordneten Teil 48 ein im Mittelbereich 38 vorgesehenes Teil 50 des inneren Polsterelements 46 vorgesehen. Die beiden Teile 48, 50 des inneren Polsterelements 46 sind einstückig ausgebildet. Der Teil 50 des inneren Polsterelements 46 ist hierbei dünner bzw. weist eine geringere Höhe als der im Sitzbereich 36 angeordnete Teil 48 auf.

An einer Unterseite 52 des inneren Polsterelements 46 ist ein Halteansatz 54 angeordnet. Der Halteansatz 54 ist mit einem im dargestellten Ausführungsbeispiel als Wulst ausgebildeten Fortsatz 56 verbunden. Im dargestellten Ausführungsbeispiel ist der Halteansatz 54 zylindrisch ausgebildet und der Fortsatz 56 als Ringwulst ausgebildet. In der Sattelschale 10 ist eine Ausnehmung bzw. Öffnung 58 angeordnet, die im dargestellten Ausführungsbeispiel durchgehend ist. Zur Fixierung des inneren Polsterelements 46 ist es daher möglich, den Halteansatz 54 zusammen mit der Wulst 56 durch die Öffnung 58 in Figur 5 von oben einzudrücken. Durch die Wulst 56, die eine größere Abmessung als die Öffnung 58 aufweist, ist ein sicheres Halten des inneren Polsterelements 46 erzielt.

Zur Herstellung der in den Figuren 1 bis 5 dargestellten oder vorstehend beschriebenen Fahrradsättel wird in einem ersten Schritt das entsprechende innere Polsterelement 28 bzw. 46 in einer entsprechenden Form hergestellt. Das innere Polsterelement 28, 46 ist hierbei vorzugsweise aus TPU und insbesondere dem von der Firma BASF unter dem Markennamen "Infinergy" vertriebenen Material. Im nächsten Schritt wird das innere Polsterelement 28, 46 mit der Oberseite 24 der Sattelschale 10 verbunden bzw. an dieser fixiert. Dies erfolgt bei den in Figur 1 bis 3 dargestellten Ausführungsformen beispielsweise durch Verkleben. Bei der in Figur 4 und 5 dargestellten Ausführungsform erfolgt das Verbinden durch Eindrücken des Halteansatzes 54 in die Öffnung 58. Im nächsten Schritt wird die Sattelschale zusammen mit dem daran befestigten inneren Polsterelement 28, 46 und zusammen mit dem an der Außenseite vorgesehenen Gestell 14 in eine Gussform gelegt. Hierbei erfolgt das Einlegen in die Gussform derart, dass das Sattelgestell nach oben weist. Anschließend wird in die Gussform das Material zur Herstellung des äußeren Polsterelements 30 eingefüllt und aufgeschäumt. Aufgrund des Einlegens des Sattels in die Gussform mit nach oben weisendem Sattelgestell ist das Einfüllen des Materials für das äußere Polsterelement 30 auf einfache Weise möglich. Durch ein Fixieren des inneren Polsterelements 28, 46 an der Sattelschale 10 ist sichergestellt, dass dieses mit der Oberseite 24 der Sattelschale 10 in Kontakt bleibt.

Gegebenenfalls kann vor dem Einlegen der Sattelschale in die Gussform, diese mit einem Sattelüberzug ausgelegt werden. Der Sattelüberzug wird in der Gussform vorzugsweise durch Unterdruck fixiert, so dass eine glatte Oberseite realisiert ist.

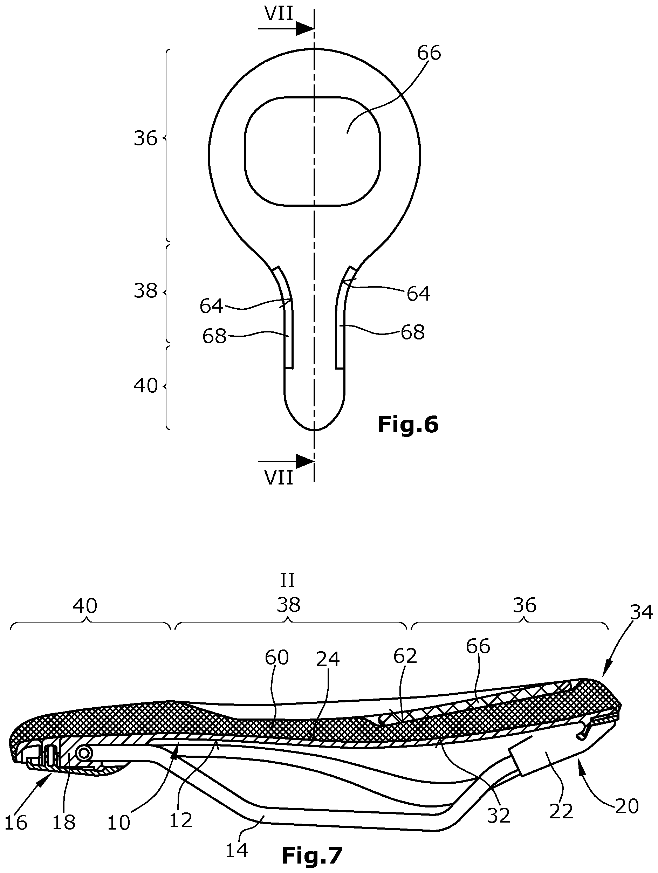

Bei der in den Figuren 6 und 7 dargestellten Ausführungsform ist mit der Oberseite 24 der Sattelschale 10 ein Hauptpolsterelement 60 verbunden. Das Hauptpolsterelement 60 ist hierbei vorzugsweise aus TPU hergestellt. Hierbei kann das Hauptpolsterelement 60 in einer gesonderten Form hergestellt und anschließend auf die Oberseite 24 aufgeklebt werden. Ebenso ist es möglich, das Material zur Herstellung des Hauptpolsterelements 60 zusammen mit der Sattelschale 10 in einer Form anzuordnen. Bei der Verwendung von TPU zur Herstellung des Hauptpolsterelements 60 wird das Rohmaterial mit Dampf in Verbindung gebracht. Vorteilhaft ist es daher, dass die Sattelschale 10 kleine Durchgangsöffnungen zum Einbringen von Dampf aufweist. Die Form des Hauptpolsterelements 60 ist derart ausgebildet, dass zumindest eine Ausnehmung 62 im Sitzbereich 36 angeordnet ist. Im Mittelbereich 38 ist seitlich jeweils eine weitere Ausnehmung 64 (Figur 6) vorgesehen. In sämtlichen Ausnehmungen 62, 64 sind Zusatzpolsterelemente 66, 68 angeordnet. Die Zusatzpolsterelemente 66, 68 sind insbesondere aus PU-Schaum hergestellt und vorzugsweise an den Außenseiten mit einem Sattelüberzugmaterial überzogen. Hierdurch ist die Reibung insbesondere an den Seiten im Mittelbereich 38 durch Anordnen der Zusatzpolsterelemente 68 verringert. Im Sitzbereich 36 ist durch die Kombination der beiden Polsterelemente 60, 66 eine gute Dämpfung sowie ein gutes Reboundverhalten realisiert.

Alternativ können in sämtlichen vorstehend beschriebenen Ausführungsformen die Sitzpolster 26 auch unabhängig von der Sattelschale hergestellt werden. Die entsprechenden Sitzpolster, die mindestens zwei unterschiedliche Polsterelemente aufweisen, können sodann auf die Oberseite 24 der Sattelschale 10 beispielsweise aufgeklebt werden.

## Patentansprüche

1. Fahrradsattel, mit
einer Sattelschale (10),
einem mit einer Unterseite (12) der Sattelschale (10) verbundenen Sattelgestell (14) und
einem an einer Oberseite (24) der Sattelschale (10) angeordneten Sattelpolster (26), wobei das Sattelpolster (26) mindestens zwei Polsterelemente (60, 66, 68) aufweist,
wobei ein Hauptpolsterelement (60) mit der Oberseite (24) der Sattelschale (10) verbunden ist, wobei in einer Ausnehmung (62) im Sitzbereich (36) des Hauptpolsterelements (60) ein Zusatzpolsterelement (66) angeordnet ist, **dadurch gekennzeichnet, dass** das Hauptpolsterelement (60) aus einem elastomeren Partikelschaum hergestellt ist.

2. Fahrradsattel nach Anspruch 1, **dadurch gekennzeichnet, dass** das Hauptpolsterelement (60) mehrere Ausnehmungen (62, 64) aufweist, in denen jeweils ein Zusatzpolsterelement (66, 68) angeordnet ist.

3. Fahrradsattel nach Anspruch 2, **dadurch gekennzeichnet, dass** das weitere Zusatzpolsterelement (68) im Mittelbereich (38), insbesondere in Außenbereichen des Mittelbereichs anordnet ist.

4. Fahrradsattel nach Anspruch 3, **dadurch gekennzeichnet, dass** ein im Mittelbereich (38) angeordnetes Zusatzpolsterelement dünner ist als ein im Sitzbereich (36) angeordnetes Zusatzpolsterelement.

5. Fahrradsattel nach einem der Ansprüche 1 bis 4, **dadurch gekennzeichnet, dass** das Zusatzpolsterelement (66, 68) zumindest an der Außenseite mit insbesondere textilem Material überspannt ist.

6. Fahrradsattel nach einem der Ansprüche 1 bis 5, **dadurch gekennzeichnet, dass** das Zusatzpolsterelement (66, 68) in die Ausnehmung (62, 64) eingeklebt ist.

7. Fahrradsattel nach einem der Ansprüche 1 bis 6, **dadurch gekennzeichnet, dass** das Zusatzpolsterelement (66, 68) PU-Schaum aufweist, insbesondere aus PU-Schaum hergestellt ist.

## Claims

1. Bicycle saddle comprising
a saddle shell (10),
a saddle frame (14) connected with a lower side (12) of the saddle shell (10), and
a saddle pad (26) arranged on an upper side (24) of the saddle shell (10), the saddle pad (26) comprising at least two pad elements (60, 66, 68),
wherein a main pad element (60) is connected to the upper side (24) of the saddle shell (10),
wherein an auxiliary pad element (66) is arranged in a recess (62) in the seat region (36) of the main pad element (60),
**characterized in that**
the main pad element (60) is made from an elastomeric particulate foam.

2. Bicycle saddle of claim 1, **characterized in that** the main pad element (60) has a plurality of recesses (62, 64) in which an auxiliary pad element (66, 68) is arranged, respectively.

3. Bicycle saddle of claim 2, **characterized in that** the further auxiliary pad element (68) is arranged in the center region (38), in particular in outer regions of the center region.

4. Bicycle saddle of claim 3, **characterized in that** an auxiliary pad element arranged in the center region (38) is thinner than an auxiliary pad element arranged in the seat region (36).

5. Bicycle saddle of one of claims 1 to 4, **characterized in that** the auxiliary pad element (66, 68) is spanned with in particular textile material at least on the outside.

6. Bicycle saddle of one of claims 1 to 5, **characterized in that** the auxiliary pad element (66, 68) is glued into the recess (62, 64).

7. Bicycle saddle of one of claims 1 to 6, **characterized in that** the auxiliary pad element (66, 68) comprises and in particular is made of PU-foam.

## Revendications

1. Selle de bicyclette, comprenant
une coque de selle (10),
un châssis de selle (14) relié à une face inférieure (12) de la coque de selle (10), et
un coussin de selle (26) disposé sur une face supérieure (24) de la coque de selle (10), le coussin de selle (26) comportant au moins deux éléments de coussin (60, 66, 68),
un élément de coussin principal (60) étant relié à la face supérieure (24) de la coque de selle (10),
un élément de coussin supplémentaire (66) étant disposé dans un évidement (62) situé dans la région d'assise (36) de l'élément de coussin principal (60),
**caractérisée en ce que** l'élément de coussin principal (60) est réalisé en une mousse particulaire élastomère.

2. Selle de bicyclette selon la revendication 1, **caractérisée en ce que** l'élément de coussin principal (60) présente plusieurs évidements (62, 64), dans chacun desquels est disposé un élément de coussin supplémentaire (66, 68).

3. Selle de bicyclette selon la revendication 2, **caractérisée en ce que** l'autre élément de coussin supplémentaire (68) est disposé dans la région médiane (38), en particulier dans des régions extérieures de la région médiane.

4. Selle de bicyclette selon la revendication 3, **caractérisée en ce qu'**un élément de coussin supplémentaire disposé dans la région médiane (38) est plus mince qu'un élément de coussin supplémentaire disposé dans la région d'assise (36).

5. Selle de bicyclette selon l'une des revendications 1 à 4, **caractérisée en ce que** l'élément de coussin supplémentaire (66, 68) est recouvert, au moins sur la face extérieure, d'un matériau en particulier textile.

6. Selle de bicyclette selon l'une des revendications 1 à 5, **caractérisée en ce que** l'élément de coussin supplémentaire (66, 68) est collé dans l'évidement (62, 64).

7. Selle de bicyclette selon l'une des revendications 1 à 6, **caractérisée en ce que** l'élément de coussin supplémentaire (66, 68) comporte de la mousse de polyuréthane, en particulier est réalisé en mousse de polyuréthane.
